(19) Europäisches Patentamt
European Patent Office
Office européen des brevets

(11) Veröffentlichungsnummer: **0 050 266**
**B1**

(12) # EUROPÄISCHE PATENTSCHRIFT

(45) Veröffentlichungstag der Patentschrift: **03.10.84**

(21) Anmeldenummer: **81107959.9**

(22) Anmeldetag: **06.10.81**

(51) Int. Cl.³: **C 09 B 62/006,** C 09 B 62/01, C 09 B 62/026, C 09 B 62/09, C 09 B 62/25 // D06P1/38

(54) **Disazoreaktivfarbstoffe, Verfahren zu ihrer Herstellung und ihre Verwendung zum Färben und/oder Bedrucken hydroxyl- und/oder stickstoffhaltiger Materialien.**

(30) Priorität: **16.10.80 DE 3039169**

(43) Veröffentlichungstag der Anmeldung: **28.04.82 Patentblatt 82/17**

(45) Bekanntmachung des Hinweises auf die Patenterteilung: **03.10.84 Patentblatt 84/40**

(84) Benannte Vertragsstaaten: **CH DE FR GB LI**

(56) Entgegenhaltungen:
**FR - A - 2 187 862**
**GB - A - 904 800**
**GB - A - 998 358**

**Die Akte enthält technische Angaben, die nach dem Eingang der Anmeldung eingereicht wurden und die nicht in dieser Patentschrift enthalten sind.**

(73) Patentinhaber: **BAYER AG, Konzernverwaltung RP Patentabteilung, D-5090 Leverkusen 1 Bayerwerk (DE)**

(72) Erfinder: **Jäger, Horst, Dr., Carl-Rumpff-Strasse 37, D-5090 Leverkusen 1 (DE)**

EP 0 050 266 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft Disazoreaktivfarbstoffe der Formel

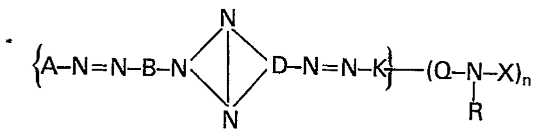

(I)

worin

A = gegebenenfalls durch $SO_3H$, $OCH_3$, $OC_2H_5$, $CH_3$, COOH substituierter Benzolrest oder gegebenenfalls durch $SO_3H$ substituierter Naphthalinrest,

B = zweiwertiger Rest der Benzol- oder Naphthalinreihe,

K = Rest einer Kupplungskomponente der Benzol-, Naphthalin- oder der heterocyclischen Reihe,

D = Rest eines annellierten Benzol- oder Naphthalinringes,

n = 1 oder 2,

R = Wasserstoff oder $C_1$-$C_4$-Alkyl,

X = Rest einer Reaktivkomponente,

Q = direkte Bindung oder Brückenglied

und worin der Rest $-Q-\overset{R}{\overset{|}{N}}-X$ an ein aromatisch-carbocyclisches C-Atom der Reste A und/oder K oder an ein aromatisch heterocyclisches C- oder N-Atom des Restes K gebunden sein kann, die Reste A, B, D und K zusammen mindestens zwei Sulfogruppen enthalten, und für den Fall, dass A und B Reste eines Benzolkerns darstellen, mindestens ein Rest A oder B einen Substituenten aus der Reihe $C_1$-$C_4$-Alkyl, $C_1$-$C_4$-Alkoxy oder Acylamino enthalten muss.

Brückenglieder Q stehen bevorzugt für Alkylen-. Alkylencarbonylimino, Phenylencarbonylimino.

Beispiele für Brückenglieder Q sind:

$-CH_2-$, $-CH_2-CH_2-$, $-CH_2-CH_2-CH_2-CH_2-$,

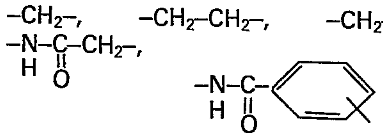

Bevorzugt steht Q für eine direkte Bindung.

Aus DE-A 2 329 126 sind ähnlich strukturierte Reaktivfarbstoffe bekannt, die jedoch im Gegensatz zu den erfindungsgemässen Farbstoffen zwingend zwei Reste von Kupplungskomponenten im Molekül aufweisen, und die im Vergleich mit den erfindungsgemässen Farbstoffen unterlegene färberische Eigenschaften besitzen.

Unter Reaktivgruppen X werden solche verstanden, die eine oder mehrere reaktive Gruppen oder abspaltbare Substituenten aufweisen, welche beim Aufbringen der Farbstoffe auf Cellulosematerialien in Gegenwart säurebindender Mittel und gegebenenfalls unter Einwirkung von Wärme mit den Hydroxylgruppen der Cellulose oder beim Aufbringen auf Superpolyamidfasern, wie Wolle, mit den NH-Gruppen dieser Fasern unter Ausbildung kovalenter Bindungen zu reagieren vermögen. Derartige faserreaktive Gruppierungen sind aus der Literatur in grosser Zahl bekannt.

Für die erfindungsgemässen Farbstoffe geeignete Reaktivgruppen, welche mindestens einen abspaltbaren Substituenten an einen heterocyclischen oder an einen aliphatischen Rest gebunden enthalten, sind unter anderem solche, die mindestens einen reaktiven Substituenten an einen 5- oder 6-gliedrigen heterocyclischen Ring gebunden enthalten, wie an einen Monazin-, Diazin-, Triazin-, z. B. Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatische Ringe aufweist, wie ein Chinolin-, Phthalazin-, Chinnolin-, Chinazolin-, Chinoxalin-, Acridin-, Phenazin- und Phenanthridin-Ring-System; die 5- oder 6-gliedrigen heterocyclischen Ringe, welche mindestens einen reaktiven Substituenten aufweisen, sind demnach bevorzugt solche, die ein oder mehrere Stickstoffatome enthalten und 5- oder bevorzugt 6-gliedrige carbocyclische Ringe ankondensiert enthalten können.

Unter den reaktiven Substituenten am Heterocyclus sind beispielsweise zu erwähnen:

Halogen (Cl, Br oder F), Ammonium, einschliesslich Hydrazinium, Sulfonium, Sulfonyl, Azido-($N_3$), Rhodanido, Thio, Thiolether, Oxiether, Sulfinsäure und Sulfonsäure. Im einzelnen sind beispielsweise zu nennen:

Mono- oder Dihalogen-symmetrische-triazinylreste, z. B. 2,4-Dichlortriazinyl-6-, 2-Amino-4-chlortriazinyl-6-, 2-Alkylamino-4-chlortriazinyl-6-, wie 2-Methylamino-4-chlortriazinyl-6-, 2-Ethylamino- oder 2-Propylamino-4-chlortriazinyl-6-, 2-ß-Oxethylamino-4-chlortriazinyl-6-, 2-Di-ß-oxethylamino-4-chlortriazinyl-6- und die entsprechenden Schwefelsäurehalbester, 2-Diethylamino-4-chlortriazinyl-6-, 2-Morpholino- oder 2-Piperidino-4-chlortriazinyl-6-, 2-Cyclohexylamino-4-chlortriazinyl-6-, 2-Arylamino- und substituiertes Arylamino-4-chlortriazinyl-6-, wie 2-Phenylamino-4-chlortriazinyl-6-, 2-(o-, m- oder p-Carboxy- oder Sulfophenyl)-amino-4-chlortriazinyl-6-, 2-Alkoxy-4-chlortriazinyl-6-, wie 2-Methoxy- oder Ethoxy-4-chlortriazinyl-6-, 2-(Phenylsulfonylmethoxy)-4-chlortriazinyl-6-, 2-Aryloxy und substituiertes Aryloxy-4-chlortriazinyl-6-, wie 2-Phenoxy-4-chlortriazinyl-6-, 2-(p-Sulfophenyl)-oxi-4-chlor-triazinyl-6-, 2-(o-, m- oder p-Methyl- oder Methoxyphenyl)-oxi-4-chlor-triazinyl-6-, 2-Alkylmercapto- oder 2-Arylmercapto- oder 2-(substituiertes Aryl)-mercapto-4-chlortriazinyl-6-, wie 2-ß-Hydroxyethylmercapto-4-chlortriazinyl-6-, 2-Phenylmercapto-4-chlortriazinyl-6-, 3-(4'-Methylphenyl)-mercapto-4-chlortriazinyl-6-, 2-(2', 4'-Dinitro)-phenylmercapto-4-chlortriazinyl-6-, 2-Methyl-4-chlor-triazinyl-6-, 2-Phenyl-4-chlor-triazinyl-6, 2,4-Difluortriazinyl-6, Monofluortriazinylreste, die durch Amino-, Alkylamino-, Aralkylamino-, Acylaminogruppen substituiert sind, wobei Alkyl, insbesondere gegebenenfalls substituiertes $C_1$-$C_4$-Alkyl, Aralkyl, insbesondere gegebenenfalls substituiertes Phenyl-, $C_1$-$C_4$-Alkyl und Aryl, insbesondere gegebenenfalls

durch Sulfo-, Alkyl-, insbesondere $C_1$-$C_4$-Alkyl-, Alkoxy-, insbesondere $C_1$-$C_4$-Alkoxy-, Carbonsäure-, Acylaminogruppen und Halogenatome wie Fluor, Chlor oder Brom substituiertes Phenyl oder Naphthyl bedeutet, beispielsweise 2-Amino-4-fluor-triazinyl-6, 2-Methylamino-4-fluor-triazinyl-6, 2-Ethylamino-4-fluor-triazinyl-6, 2-iso-Propylamino-4-fluor-triazinyl-6, 2-Dimethylamino-4-fluor-triazinyl-6, 2-Diethylamino-4-fluor-triazinyl-6, 2-ß-Methoxy-ethylamino-4-fluor-triazinyl-6, 2-ß-Hydroxyethylamino-4-fluor-triazinyl-6, 2-Di-(ß-hydroxyethylamino)-4-fluor-triazinyl-6, 2-ß-Sulfoethylamino-4-fluor-triazinyl-6, 2-ß-Sulfoethyl-methylamino-4-fluor-triazinyl-6, 2-Carboxymethylamino-4-fluor-triazinyl-6, 2-ß-Cyanethylamino-4-fluor-triazinyl-6, 2-Benzylamino-4-fluor-triazinyl-6, 2-ß-Phenylethylamino-4-fluor-triazinyl-6, 2-Benzyl-methylamino-4-fluor-triazinyl-6, 2-(x-Sulfo-benzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methylphenyl)-amino-4-fluor-triazinyl-6, 2-(N-Ethylphenyl)-amino-4-fluor-triazinyl-6, 2-(N-ß-Hydroxyethyl-phenyl)-amino-4-fluor-triazinyl-6, 2-(N-iso-Propylphenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-4-fluor-triazinyl-6, 2-(3',6',8'-Trisulfonaphthyl-(2'))-4-fluor-triazinyl-6, 2-(3',6'-Disulfonaphthyl-(1'))-4-fluor-triazinyl-6, Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono- -di- oder -trichlormethyl- oder -5-carboalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl, 2,4,6-Trichlorpyrimidin-5-carbonyl-, 2,4-Dichlorpyrimidin-5-sulfonyl-, 2-Chlorchinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-6-carbonyl-, 2,3-Dichlorchinoxalin-6-sulfonyl-, 1,4-Dichlorphthalazin-6-sulfonyl- oder -6-carbonyl-, 2,4-Dichlorchinazolin-7- oder -6-sulfonfyl- oder -carbonyl-, 2- oder 3- oder 4-(4',5'-Dichlorpyridazon-6'-yl-1')-phenylsulfonyl- oder -carbonyl-, ß-(4',5'-Dichlorpyridazon-6'-yl-1')-ethylcarbonyl-, N-Methyl-N-(2,4-dichlortriazinyl-6)-carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl- oder N-Ethyl-N-(2,4-dichlortriazinyl-6)-amino-acetyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methylsulfonyl-4-pyrimidinyl-, 2-Fluor-5-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-phenyl-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-5-chlor-6-methyl-pyrimidinyl-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4-, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methyl-pyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, methyl-pyrimidinyl-4-, 2-Methyl-sulfonyl-6-chlor-pyrimidinyl-4-, 2,6-Bis-methylsulfonyl-5-chlor-pyrimidinyl-4-, 2-Methylsulfonyl-6-carboxy-pyrimidinyl-4-, 2-Methylsulfonyl-5-sulfo-pyrimidinyl-4-,2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlorpyrimidinyl-4-, 2-Sulfoethylsulfonyl-6-methyl-pyrimidinyl-4-, 2-Methylsulfonyl-5-brom-pyrimidinyl-4-, 2-Phenyl-sulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und 5-carbonyl-, 2,6-Bis-(methyl-sulfonyl)-pyrimidin-4- oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methyl-pyrimidin-5-sulfonyl- oder -carbonyl-; ammoniumgruppenhaltige Triazinringe, wie Trimethylammonium-4-phenylamino- oder -4-(o-, m- oder p-sulfophenyl)-aminotriazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)-hydrazinium-4-phenylamino- oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-sulfophenyl)-aminotriazinyl-6-, ferner 4-Phenylamino- oder -4-(sulfophenylamino)-triazinyl-6-Reste, die in 2-Stellung über eine Stickstoffbindung das 1,4-Bis-azabicyclo-/2,2,2/-octan oder das 1,2-Bis-aza-bicyc-10-/0,3,3/-octan quartär gebunden enthalten, 2-Pyridinium-4-phenylamino- oder -4-(o-, m- oder p-sulfophenyl)-aminotriazinyl-6- sowie entsprechende 2-Oniumtriazinyl-6-Reste, die in 4-Stellung durch Alkylamino-, wie Methylamino-, Ethylamino- oder ß-Hydroxyethylamino- oder Alkoxy-, wie Methoxy- oder Alkoxy-, oder Aroxy-, wie Phenoxy- oder Sulfophenoxy-Gruppen substituiert sind; 2-Chlorbenzthiazol-5- oder -6-carbonyl- oder -5- oder -6-sulfonyl-, 2-Arylsulfonyl-oder-Alkylsulfonylbenzthiazol-5- oder -6-carbonyl-oder -5- oder -6-sulfonyl-, wie 2-Methyl-sulfonyl-oder 2-Ethylsulfonylbenzthiazol-5- oder -6-sulfonyl- oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5-oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-carbonyl- oder -4- oder -5-sulfonyl-, N-Oxid des 4-Chlor- oder 4-Nitrochinolin-5-carbonyl oder auch die Reste 5-Chlor-2,6-difluor-1,3-dicyan-phenyl, 2,4-Difluor-1,3,5-tricyanphenyl, 2,4,5-Trifluor-1,3-dicyan-phenyl, 2,4-Dichlor-5-methylsulfonyl-pyrimidinyl-6, 2,4-Trichlor-5-ethylsulfonyl-pyrimidinyl-6, 2-Fluor-5-methylsulfonyl-6'-(2'-sulfophenylamino) -pyrimidinyl-4.

Desweiteren sind Reaktivgruppen der aliphatischen Reihe zu nennen, wie Acryloyl-, Mono-, Di-oder Trichloracryloyl-, wie $-CO-CH=CH-Cl$, $-CO-CCl=CH_2$, $-CO-CCl=CH-CH_3$, ferner $-CO-CCl=CH-COOH$, $-CO-CH=CCl-COOH$, ß-Chlorpropionyl, 3-Phenylsulfonylpropionyl-, 3-Methylsulfonylpropionyl-, ß-Sulfato-ethylaminosulfonyl-, Vinylsulfonyl-, ß-Chlor-ethylsulfonyl-, ß-Sulfatoethylsulfonyl-, ß-Methylsulfonylethylsulfonyl-, ß-Phenylsulfonylethylsulfonyl-, 2-Fluor-2-chlor-3,3-difluorcyclobutan-1-carbonyl-, 2,2,3,3-Tetrafluorcyclobutan-carbonyl-1- oder -sulfonyl-1-, ß-(2,2,3,3-Tetrafluorcyclobutyl-1)-acryloxy-, α- oder ß-Bromacryloyl-, α- oder ß-Alkyl- oder Arylsulfoacryloyl-Gruppe, wie α- oder ß-Methylsulfonylacryloyl.

Bevorzugte Farbstoffe sind solche der Formel (I), wobei die Reste B, K, D, n, R, X und Q die dort angegebene Bedeutung besitzen und A für einen der folgenden Reste steht:

2-,3- oder 4-Sulfophenyl, 2,4-, 3,5-, oder 2,5-Disulfophenyl, 2-Sulfo-4-methoxyphenyl, 2-Sulfo-4-ethoxyphenyl, 2,4-Dimethyl-6-sulfophenyl, 2-Carboxy-4-sulfophenyl, 2-Carboxy-5-sulfophenyl, 4-Methyl-2,5-disulfophenyl, 4-Methoxy-2,5-disulfophenyl, 2-Methoxy-5-methyl-4-sulfophenyl, 4-Methoxy-3-sulfophenyl, 4-Methyl-3-sulfophenyl, 2-, 3- oder 4-carboxyphenyl, 2-, 4-, 5-, 6-, 7- oder 8-Sulfonaphthyl-(1), 1-, 5- oder 6-Sulfonaphthyl-(2), 2,5,7-Trisulfonaphthyl-(1), 1,5,7-Trisulfonaphthyl-(2), 3,6,8-Trisulfonaphthyl-(2) oder 4,6,8-Trisulfonaphthyl-(2).

Weiterhin bevorzugt sind Farbstoffe der Formel

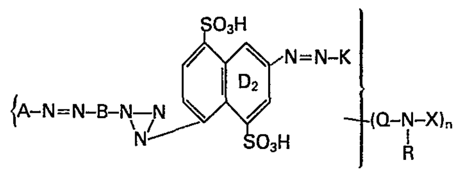

(II)

worin A, B, K, Q, R, X und n die unter Formel (I) angegebene Bedeutung haben und der Naphthalinring $D_2$ eine OH-Gruppe enthalten kann, die über die Azobrücke zusammen mit einer zur Komplexbildung befähigten Gruppe im Rest K einen Schwermetallkomplex, insbesondere einen Cu-Komplex, bilden kann.

Ausserdem bevorzugt sind Farbstoffe der Formel (III)

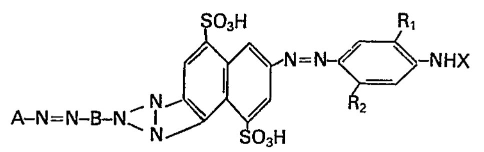

(III)

worin A, B und X die unter Formel (I) angegebene Bedeutung haben und

$R_1$ = Wasserstoff, Halogen wie Fluor, Chlor, Brom, $C_1$-$C_4$-Alkyl, $C_1$-$C_4$-Alkoxy,

$R_2$ = Wasserstoff, $C_1$-$C_4$-Alkyl, $C_1$-$C_4$-Alkoxy, Acylamino.

Insbesondere bevorzugt sind Farbstoffe der Formeln (II) und (III), in denen X für den Rest einer fluorhaltigen Reaktivkomponente der Pyrimidinreihe oder eines Monofluortriazin steht.

Den Reaktivfarbstoffen der Formel (I) liegen in

Abhängigkeit von den verschiedenen Möglichkeiten der Synthese eine Reihe von Ausgangskomponenten zugrunde. Weiterhin seien im folgenden die einzelnen Strukturelemente aus Formel (I) näher charakterisiert.

Als Ausgangs-Diazokomponenten

$A{-}NH_2$ XII

seien die folgenden Beispiele genannt:
1-Aminobenzol-2-, -3- oder -4-sulfonsäure,
1-Aminobenzol-2,4-, -3,5- oder -2,5-disulfonsäure,
1-Amino-4-methoxy-benzol-2-sulfonsäure,
1-Amino-4-ethoxy-benzol-2-sulfonsäure,
1-Amino-2,4-dimethyl-benzol-6-sulfonsäure,
1-Amino-2-carboxy-benzol-4- oder -5-sulfonsäure,
1-Amino-4-methyl-benzol-2,5-disulfonsäure,
1-Amino-4-methoxy-benzol-2,5-disulfonsäure,
1-Amino-2-methoxy-5-methyl-benzol-4-sulfonsäure,
1-Amino-4-methoxy-benzol-3-sulfonsäure,
1-Amino-4-methyl-benzol-3-sulfonsäure,
1-Amino-2-, -3- oder -4-carboxy-benzol,
1-Aminonaphthalin-2-, -4-, -5-, -6-, -7- oder -8-sulfonsäure,
2-Aminonaphthalin-1-, -5- oder -6-sulfonsäure,
1-Aminonaphthalin-3,6- oder -5,7-disulfonsäure,
2-Aminonaphthalin-1,5-, -1,7-, -3,6-, -5,7-, -4,8- oder -6,8-disulfonsäure,
1-Aminonaphthalin-2,5,7-trisulfonsäure,
2-Aminonaphthalin-1,5,7-, -3,6,8- oder -4,6,8-trisulfonsäure.

Beispiele für Diazokomponenten der Formel

$A{-}NH_2$
|
Q XIII
|
H–N–R

sind folgende, wobei für
Q = direkte Bindung die Aminogruppe –N–H bei der Synthese der Verbindung zunächst in acylierter Form vorliegt und erst in einem späteren Verseifungsschritt die Acylgruppe abgespalten wird oder anstelle der Aminogruppe eine Nitrogruppe steht, die dann reduziert wird:

1-Amino-5-N-methylaminomethyl-benzol-2-sulfonsäure,
1-Amino-4-methoxy-3-aminomethyl-benzol-3-sulfonsäure,
2-Amino-5-aminomethyl-naphthalin-1-sulfonsäure,
2-Amino-5-aminomethyl-naphthalin-1,7-disulfonsäure.

Als Beispiele für die durch -B- charakterisierten Reste seien folgende genannt:

Phenylen-1,4, Phenylen-1,3, 2-Methylphenylen-1,4, 2-Chlorphenylen-1,4, 2-Sulfophenylen-1,4, 2-Methoxyphenylen-1,4, 4-Sulfophenylen-1,3, 4-Methyl-phenylen-1,3, 2-Methoxy-5-methyl-phenylen-1,4, 2,5-Dimethyl-phenylen-1,4, 2,5-Dimethoxyphenylen-1,4, 6-Sulfo-naphthylen-1,4, 7-Sulfo-naphthylen-1,4, 2-Methoxy-6-sulfo-naphthylen-1,4, 1-Hydroxy-3-sulfo-naphthylen-2,6, 1-Hydroxy-3-sulfo-naphthylen-2,7, 1-Hydroxy-3,6-disulfo-naphthylen-2,8, 1-Hydroxy-3,5-disulfo-naphthylen-2,8, 1-Hydroxy-3-sulfo-naphthylen-2,5.

Geeignete Triazolreste der Formel

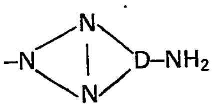 (IV)

sind folgende:

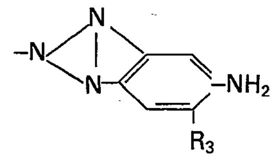

worin $R_3$ = Wasserstoff, Methyl, Methoxy, Chlor, Carboxy, Sulfo oder Hydroxy, zum Beispiel:

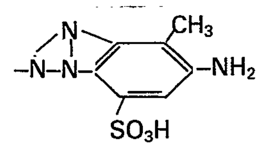

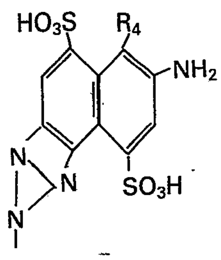

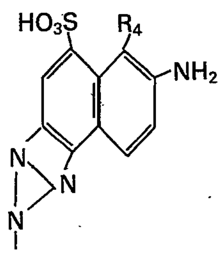

worin $R_4$ = Wasserstoff oder Hydroxy.

Als Kupplungskomponenten H–K kommen insbesondere solche der Pyridon-, Pyrazolon-, Acetessigsäurearylid-, Aminobenzol-, Aminonaphthol-, Naphtholsulfonsäurereihe in Frage.

Beispiele für Kupplungskomponenten der Formel

H–K (V)

sind folgende:

a) Pyridone
1-Ethyl-3-carbamoyl-4-methyl-6-hydroxy-pyridon-2,
1-Methyl-3-carbamoyl-4-methyl-6-hydroxy-pyridon-2,
1-Ethyl-3-chlor-4-methyl-6-hydroxy-pyridon-2,
1-Ethyl-3-sulfo-4-methyl-6-hydroxy-pyridon-2,
1-Ethyl-3-sulfomethyl-4-methyl-6-hydroxy-pyridon-2,
1-Ethyl-4-methyl-6-hydroxy-pyridon-2.

b) Pyrazolone
1-(2′, 3′- oder 4′-Sulfophenyl)-3-methyl-pyrazolon-5,

1-(2'-Chlor-4'- oder 5'-sulfophenyl)-3-methyl-pyrazolon-5,
1-(2'-Methyl-4'-sulfo-phenyl)-3-methyl-pyrazolon-5,
1-(2'-Methyl-4'-sulfo-phenyl)-3-carboxy-pyrazolon-5,
1-ß-Carboxy-ethyl-3-carboxy-pyrazolon-5.

1-(4',8'-Disulfo-naphthyl-(2))-3-methyl-pyrazolon-5,
1-(5',7'-Disulfo-naphthyl-(2))-3-methyl-pyrazolon-5,
1-(2'-Chlor-5'-sulfo-phenyl)-3-methyl-5-amino-pyrazol,
1-(2'-Chlor-4'-sulfo-phenyl)-3-methyl-5-amino-pyrazol,
1-(3'- oder 4'-sulfo-phenyl)-3-methyl-5-amino-pyrazol,
1-Carboxy-methyl-3-methyl-pyrazolon-5,
1-ß-Carboxyethyl-3-methyl-pyrazolon-5,
1-ß-Carboxyethyl-3-methyl-5-amino-pyrazol,
1-(4'-Sulfo-phenyl)-3-carboxy-pyrazolon-5.
c) Acetessigsäurearylide
Acetessigsäure-(2-methoxy-4-sulfo-5-methyl)-anilid,
Acetessigsäure-(2-methoxy-4-acetylamino-5-sulfo)-anilid,
Acetessigsäure-(2,5-dimethoxy-4-sulfo)-anilid.
d)Naphtholsulfonsäuren
1-Hydroxy-naphthalin-4- oder -5-sulfonsäure,
1-Hydroxy-naphthalin-3,5-, -3,6-, -3,7-, -3,8-, -4,6-, -4,7- oder -4,8-disulfonsäure.
1-Hydroxy-naphthalin-3,6,8- oder -4,6,8-trisulfonsäure,
2-Hydroxy-naphthalin-4-, -5-, -6-, -7-, -8-sulfonsäure,
2-Hydroxy-naphthalin-3,6-, -3,7-, -5,7- oder -6,8-disulfonsäure,
1-Hydroxy-8-acetylamino-naphthalin-3,6- oder -3,5-disulfonsäure,
1-Hydroxy-8-benzoylamino-naphthalin-3,6- oder -3,5-disulfonsäure,
1-Hydroxy-6-acetylamino-naphthalin-3-sulfonsäure,
1-Hydroxy-7-acetylamino-naphthalin-3-sulfonsäure,
1-Hydroxy-8-acetylamino-naphthalin-5-sulfonsäure,
1-Hydroxy-8-amino-naphthalin-5,7-disulfonsäure,
1-Hydroxy-7-phenylamino-naphthalin-3-sulfonsäure sowie
Barbitursäure bzw. Cyanaminobarbitursäure und 1-Amino-3-acetylamino-benzol-6-sulfonsäure.

Beispiele für Kupplungskomponenten, die durch die Formel

H–K–Q–N–H (VI)
|
R

wiedergegeben werden, sind folgende:
a) Pyridone
1-ß-Aminoethyl-3-carbamoyl-4-methyl-6-hydroxy-pyridon-2,
1-ß-Aminoethyl-3-chlor-4-methyl-6-hydroxy-pyridon-2,
1-(3'-Aminophenyl)-4-methyl-6-hydroxy-pyridon-2.
b) Pyrazolone
1-(3'-Aminophenyl)-3-methyl-pyrazolon-5,
1-(4'-Aminophenyl)-3-methyl-pyrazolon-5,
1-(4'-Amino-2'-sulfophenyl)-3-methyl-pyrazolon-5,
1-(2'-Methyl-3'-amino-5'-sulfophenyl)-3-methyl-pyrazolon-5,
1-(ß-Aminoethyl)-3-methyl-pyrazolon-5,
1-(3'-Aminophenyl)-3-carboxy-pyrazolon-5.
c) Acetessigsäurearylide
Acetessigsäure-(2-methoxy-4-amino-5-sulfo)-anilid,
Acetessigsäure-(2-sulfo-4-amino)-anilid.
d)Aminobenzole und Aminonaphthaline
Anilin, o-Toluidin, o-Anisidin, 2,5-Dimethyl-anilin, 2,5-Dimethoxy-anilin, 2,5-Diethoxy-anilin, 2-Methoxy-5-methyl-anilin, 3-Acetylamino-anilin, 3-Ureidoanilin, m-Toluidin, 3-Acetylamino-6-methoxy-anilin, 1-Amino-naphthalin, 1-Amino-naphthalin-6-oder -7-sulfonamid, 1-Amino-2-ethoxy-naphthalin-6-sulfonsäure.
e) Aminonaphthole
1-Hydroxy-8-amino-naphthalin-3,6-, -4,6- oder -3,5-disulfonsäure,
1-Hydroxy-6-amino-naphthalin-3-sulfonsäure,
1-Hydroxy-7-amino-naphthalin-3-sulfonsäure,
1-Hydroxy-6-amino-naphthalin-3,5-disulfonsäure,
1-Hydroxy-7-amino-naphthalin-3,6-disulfonsäure,
1-Hydroxy-6-amino-naphthalin-4,8-disulfonsäure,
1-Hydroxy-8-amino-naphthalin-5-sulfonsäure,
1-Hydroxy-8-(3'- oder 4'-aminobenzoylamino)-naphthalin-3,6- oder -3,5-disulfonsäure.

Beispiele für die durch X gekennzeichneten fluorhaltigen Reaktivgruppen der Pyrimidinreihe sind folgende:
2,6-Difluor-5-chlor-pyrimidinyl-4,
2-Fluor-5-chlor-pyrimidinyl-4,
2-Fluor-5-chlor-6-methyl-pyrimidinyl-4,
2-Fluor-5,6-dichlor-pyrimidinyl-4.

Beispiele für die durch X gekennzeichneten Reaktivgruppen der Monofluortriazinreihe sind folgende:
2-Fluor-4-amino-triazinyl-6,
2-Fluor-4-methylamino-triazinyl-6,
2-Fluor-4-ß-oxyethylamino-triazinyl-6,
2-Fluor-4-diethylamino-triazinyl-6,
2-Fluor-4-N-methylphenylamino-triazinyl-6,
2-Fluor-4-N-ethylphenylamino-triazinyl-6,
2-Fluor-4-(2'-sulfophenylamino)-triazinyl-6,
2-Fluor-4-(3'-sulfophenylamino)-triazinyl-6,
2-Fluor-4-(4'-sulfophenylamino)-triazinyl-6,
2-Fluor-4-(2',5'-disulfophenylamino)-triazinyl-6.

Gegenstand der Erfindung sind weiterhin Verfahren zur Herstellung der Farbstoffe der Formel (I). Im einzelnen sind folgende Verfahren zu erwähnen:

1) Verbindungen der Formel

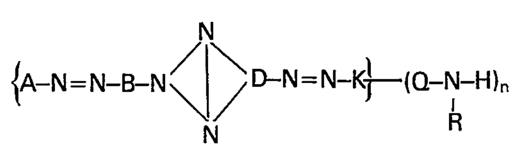 (VII)

werden mit n Mol Reaktivkomponente der Formel

X–Y (VIII),

worin Y einen als Anion abspaltbaren Substituenten (insbesondere Halogen) darstellt unter Abspaltung von n Mol HY umgesetzt.

2) Amine der Formel

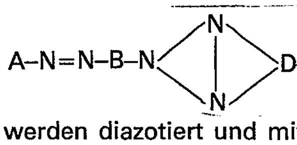

(IX)

werden diazotiert und mit Kupplungskomponenten der Formel

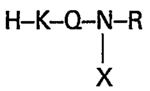

(X)

unter geeigneten Bedingungen vereinigt.

3) Amine der Formel

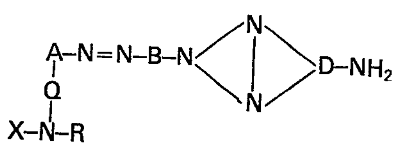

(XI)

werden diazotiert und mit Kupplungskomponenten der Formel

H–K (V)

unter geeigneten Bedingungen vereinigt.

In den Verbindungen der Formeln (V) bis (XI) haben A, B, D, K, Q, R, X und n die oben angegebene Bedeutung.

Die Reaktionsbedingungen der Herstellungsvarianten 1) bis 3) entsprechen den auf dem Gebiet der Diazotierung, bzw. Tetrazotierung und Kupplung üblichen Bedingungen.

Geeignete Reaktivkomponenten der Formel (VIII) sind beispielsweise solche, die den vorgenannten Reaktivgruppen zugrundeliegen, d.h. im allgemeinen die Halogenide, insbesondere die Chloride der genannten Komponenten. Aus der grossen Zahl der zur Verfügung stehenden Verbindungen seien hier auszugsweise erwähnt:
Trihalogen-symmetrische-triazine, wie Cyanurchlorid und Cyanurbromid, Dihalogen-monoamino- und monosubstituierte aminosymmetrische triazine, wie 2,6-Dichlor-4-aminotriazin, 2,6-Dichlor-4-methylaminotriazin, 2,6-Dichlor-4-ethylaminotriazin, 2,6-Dichlor-4-oxethylaminotriazin, 2,6-Dichlor-4-phenylaminotriazin, 2,6-Dichlor-4-(o-, m- oder p-sulfophenyl)-aminotriazin, 2,6-Dichlor-4-(2', 3'-, 2',4-, 3',4'- oder -3'5'-disulfophenyl)-aminotriazin, Dihalogen-alkoxy- und aryloxy-sym.triazine, wie 2,6-Dichlor-4-methoxytriazin, 2,6-Dichlor-4-ethoxytriazin, 2,6-Dichlor-4-phenoxytriazin, 2,6-Dichlor-4-(o-, m- oder p-sulfophenyl)-oxitriazin, Dihalogen-alkylmercapto- und -arylmercapto sym.-triazine, wie 2,6-Dichlor-4-ethylmercapto-triazin, 2,6-Dichlor-4-phenylmercaptotriazin, 2,6-Dichlor-4-(p-methylphenyl)-mercaptotriazin, 2,4,6-Trifluortriazin, 2,4-Difluor-6-(o-, m-, p-methyl-phenyl)-amino-triazin, 2,4-Difluor-6-(o-, m-, p-sulfophenyl)-amino-triazin, 2,4-Difluor-6-methoxy-triazin, 2,4-Difluor-6-(2',5'-disulfophenyl)-amino-triazin, 2,4-Difluor-6-(6'-sulfonaphthyl-2')-amino-triazin, 2,4-Difluor-6-(o-, m-, p-ethylphenyl)-amino-triazin, 2,4-Difluor-6-(o-, m-, p-chlorphenyl)-amino-triazin, 2,4-Difluor-6-(o-, m-, p-methoxyphenyl)-amino-triazin, 2,4-Difluor-6-(2'-methyl-5'-sulfophenyl)-amino-triazin, 2,4-Difluor-6-(2'-methyl-4'-sulfophenyl)-amino-triazin, 2,4-Difluor-6-(2'-chlor-4'-sulfophenyl)-amino-triazin, 2,4-Difluor-6-(2'-chlor-5'-sulfophenyl)-amino-triazin, 2,4-Difluor-6-(2'-methoxy-4'-sulfophenyl)-amino-triazin, 2,4-Difluor-6-(o-, m-, p-carboxyphenyl)-amino-triazin, 2,4-Difluor-6-(N-methyl-phenyl)-amino-triazin, 2,4-Difluor-6-(N-ethyl-phenyl)-amino-triazin, 2,4-Difluor-6-(N-isopropyl-phenyl)-amino-triazin, 2,4-Difluor-6-cyclohexylamino-triazin, 2,4-Difluor-6-morpholino-triazin, 2,4-Difluor-6-piperidino-triazin, 2,4-Difluor-6-benzylamino-triazin, 2,4-Difluor-6-N-methyl-benzyl-amino-triazin, 2,4-Difluor-6-ß-phenylethyl-amino-triazin, 2,4-Difluor-6-(X-sulfo-benzyl)-amino-triazin, 2,4-Difluor-6-(2',4'-disulfophenyl)-amino-triazin, 2,4-Difluor-6-(3',5'-disulfophenyl)-amino-triazin, 2,4-Difluor-6-(2'-carboxy-4'-sulfo-phenyl)-amino-triazin, 2,4-Difluor-6-(2',5'-disulfo-4-methoxyphenyl)-amino-triazin, 2,4-Difluor-(2'-methyl-4',6'-disulfophenyl)-amino-triazin, 2,4-Difluor-(6',8'-disulfonaphthyl-(2'))-amino-triazin, 2,4-Difluor-(4',8'-disulfonaphthyl-(2'))-amino-triazin, 2,4-Difluor-(4',6',8'-trisulfo-naphthyl-(2'))-amino-triazin, 2,4-Difluor-(3',6',8'-trisulfonaphthyl-(2'))-amino-triazin, 2,4-Difluor-(3',6'-disulfonaphthyl-(1'))-amino-triazin, 2,4-Difluor-6-amino-triazin, 2,4-Difluor-6-methylamino-triazin, 2,4-Difluor-6-ethylamino-triazin, 2,4-Difluor-6-methoxyethoxy-triazin, 2,4-Difluor-6-methoxyethylamino-triazin, 2,4-Difluor-6-dimethylamino-triazin, 2,4-Difluor-6-diethylamino-triazin, 2,4-Difluor-6-iso-propylamino-triazin, Tetrahalogenpyrimidine, wie Tetrachlor-, Tetrabrom- oder Tetrafluor-pyrimidin, 2,4,6-Trihalogenpyrimidine, wie 2,4,6-Trichlor-, Tribrom- oder Trifluorpyrimidin, Dihalogenpyrimidine, wie 2,4-Dichlor-, -Dibrom- oder -Difluorpyrimidin; 2,4,6-Trichlor-5-nitro- oder -5-methyl- oder -5-carbomethoxy- oder -5-carboethoxy- oder -5-carboxymethyl- oder -5-mono, -di- oder -trichlormethyl- oder -5-carboxy- oder -5-sulfo- oder -5-cyano- oder -5-vinyl-pyrimidin, 2,4-Difluor-6-methylpyrimidin, 2,6-Difluor-4-methyl-5-chlorpyrimidin, 2,4-Difluor-pyrimidin-5-ethylsulfon, 2,6-Difluor-4-chlorpyrimidin, 2,4,6-Trifluor-5-chlorpyrimidin, 2,6-Difluor-4-methyl-5-brompyrimidin, 2,4-Difluor-5,6-dichlor- oder -dibrompyrimidin, 4,6-Difluor-2,5-dichlor- oder -dibrompyrimidin, 2,6-Difluor-4-brompyrimidin, 2,4,6-Trifluor-5-brompyrimidin, 2,4,6-Trifluor-5-chlormethylpyrimidin, 2,4,6,-Trifluor-5-nitropyrimidin, 2,4,6-Trifluor-5-cyanpyrimidin, 2,4,6-Trifluorpyrimidin-5-carbonsäurealkylester oder -5-carbonsäureamide, 2,6-Difluor-5-methyl-4-chlorpyrimidin, 2,6-Difluor-5-chlorpyrimidin, 2,4,6-Trifluor-5-methylpyrimidin, 2,4,5-Trichlor-6-methylpyrimidin, 2,4-Difluor-5-nitro-6-chlorpyrimidin, 2,4-Difluor-5-cyanpyrimidin, 2,4-Difluor-5-methyl-

pyrimidin, 6-Trifluormethyl-5-chlor-2,4-difluorpyrimidin, 6-Phenyl-2,4-difluorpyrimidin, 6-Trifluormethyl-2,4-difluorpyrimidin, 5-Trifluormethyl-2,4,6-trifluorpyrimidin, 2,4-Difluor-5-nitro-pyrimidin, 2,4-Difluor-5-trifluormethylpyrimidin, 2,4-Difluor-5-methylsulfonyl-pyrimidin, 2,4-Difluor-5-phenyl-pyrimidin, 2,4-Difluor-5-carbonamido-pyrimidin, 2,4-Difluor-5-carbomethoxy-pyrimidin, 2,4-Difluor-6-trifluormethylpyrimidin, 2,4-Difluor-6-carbonamido-pyrimidin, 2,4-Difluor-6-carbomethoxypyrimidin, 2,4-Difluor-6-phenyl-pyrimidin, 2,4-Difluor-6-cyanpyrimidin, 2,4,6-Trifluor-5-methylsulfonylpyrimidin, 2,4-Difluor-5-sulfonamidopyrimidin, 2,4-Difluor-5-chlor-6-carbomethoxy-pyrimidin, 5-Trifluormethyl-2,4-difluorpyrimidin, 2,4-Dichlorpyrimidin-5-carbonsäurechlorid, 2,4,6-Trichlorpyrimidin-5-carbonsäurechlorid, 2-Methyl-4-chlorpyrimidin-5-carbonsäurechlorid, 2-Chlor-4-methylpyrimidin-5-carbonsäurechlorid, 2,6-Dichlorpyrimidin-4-carbonsäurechlorid; Pyrimidin-Reaktivkomponenten mit abspaltbaren Sulfonylgruppen, wie 2-Carboxymethylsulfonyl-4-chlorpyrimidin, 2-Methylsulfonyl-4-chlor-6-methylpyrimidin, 2,4-Bis-methylsulfonyl-6-methylpyrimidin, 2,4-Bis-phenylsulfonyl-5-chlor-6-methylpyrimidin, 2,4,6-Trismethylsulfonyl-pyrimidin, 2,6-Bis-methylsulfonyl-4,5-dichlorpyrimidin, 2,4-Bis-methylsulfonylpyrimidin-5-sulfonsäurechlorid, 2-Methylsulfonyl-4-chlorpyrimidin, 2-Phenylsulfonyl-4-chlorpyrimidin, 2,4-Bis-trichlormethylsulfonyl-6-methylpyrimidin, 2,4-Bis-methylsulfonyl-5-chlor-6-methylpyrimidin, 2,4-Bis-methylsulfonyl-5-brom-6-methylpyrimidin, 2-Methylsulfonyl-4,5-dichlor-6-methylpyrimidin, 2-Methylsulfonyl-4,5-dichlor-6-chlormethylpyrimidin, 2-Methylsulfonyl-4-chlor-6-methylpyrimidin-5-sulfonsäurechlorid, 2-Methylsulfonyl-4-chlor-5-nitro-6-methylpyrimidin, 2,4,5,6-Tetramethylsulfonyl-pyrimidin, 2-Methylsulfonyl-4-chlor-5,6-dimethylpyrimidin, 2-Ethylsulfonyl-4,5-dichlor-6-methylpyrimidin, 2-Methylsulfonyl-4,6-dichlorpyrimidin, 2,4,6-Tris-methylsulfonyl-5-chlor-pyrimidin, 2-Methylsulfonyl-4-chlor-6-carboxypyrimidin, 2-Methylsulfonyl-4-chlorpyrimidin-5-sulfonsäure, 2-Methylsulfonyl-4-chlor-6-carbomethoxypyrimidin, 2-Methylsulfonyl-4-chlor-pyrimidin-5-carbonsäure, 2-Methylsulfonyl-4-chlor-5-cyan-6-methoxypyrimidin,2-Methylsulfonyl-4,5-dichlorpyrimidin, 4,6-Bis-methylsulfonyl-pyrimidin, 4-Methylsulfonyl-6-chlorpyrimidin, 2-Sulfoethyl-sulfonyl-4-chlor-6-methylpyrimidin, 2-Methylsulfonyl-4-chlor-5-brompyrimidin, 2-Methylsulfonyl-4-chlor-5-brom-6-methylpyrimidin, 2,4-Bis-methylsulfonyl-5-chlorpyrimidin, 2-Phenylsulfonyl-4,5-dichlorpyrimidin, 2-Phenylsulfonyl-4,5-dichlor-6-methylpyrimidin, 2-Carboxymethylsulfonyl-4,5-dichlor-6-methylpyrimidin, 2-(2'- oder 3'- oder 4'-Carboxyphenylsulfonyl)-4,5-dichlor-6-methylpyrimidin, 2,4-bis-(2'- oder 3'- oder 4'-Carboxyphenylsulfonyl)-5-chlor-6-methylpyrimidin, 2-Methylsulfonyl-6-chlorpyrimidin-4- oder -5-carbonsäurechlorid, 2-Ethylsulfonyl-6-chlorpyrimidin-4- oder -5-carbonsäurechlorid, 2,6-Bis-(methylsulfonyl)-pyrimidin-4-carbonsäurechlorid, 2-Methylsulfonyl-6-methyl-4-chlor- oder -4-brompyrimidin-5-carbonsäurechlorid oder -bromid, 2,6-Bis-(methylsulfonyl)-4-chlorpyrimidin-5-carbonsäurechlorid; weitere Reaktivkomponenten der heterocyclischen Reihe mit reaktiven Sulfonylsubstituenten sind beispielsweise 3,6-Bis-phenylsulfonylpyridazin, 3-Methylsulfonyl-6-chlorpyridazin, 3,6-Bis-trichlormethylsulfonylpyridazin, 3,6-Bis-methylsulfonyl-4-methylpyridazin, 2,5,6-Tris-methylsulfonylpyridazin, 2,4-Bis-methylsulfonyl-1,3,5-triazin, 2,4-Bis-methylsulfonyl-6-(3'-sulfophenylamino)-1,3,5-triazin, 2,4-Bis-methylsulfonyl-6-N-methylanilino-1,3,5-triazin, 2,4-Bis-methylsulfonyl-6-phenoxy-1,3,5-triazin, 2,4-Bis-methylsulfonyl-6-trichlorethoxy-1,3-5-triazin, 2,4,6-Tris-phenylsulfonyl-1,3,5-triazin, 2,4-Bis-methylsulfonylchinazolin, 2,4-Bis-trichlormethylsulfonylchinolin, 2,4-Bis-carboxymethylsulfonylchinolin, 2,6-Bis-(methylsulfonyl)-pyridin-4-carbonsäurechlorid und 1-(4'-Chlorcarbonylphenyl oder 2'-chlorcarbonylethyl)-4,5-bis-methylsulfonyl-pyridazon-(6); weitere heterocyclische Reaktivkomponenten mit beweglichem Halogen sind unter anderem 2- oder 3-Monochlorchinoxalin-6-carbonsäurechlorid oder 6-sulfonsäurechlorid, 2- oder 3-Monobromchinoxalin-6-carbonsäurebromid oder -6-sulfonsäurebromid, 2,3-Dichlorchinoxalin-6-carbonsäurechlorid oder -6-sulfonsäurechlorid, 2,3-Dibromchinoxalin-6-carbonsäurebromid oder -6-sulfonsäurebromid, 1,4-Dichlorphthalazin-6-carbonsäurechlorid oder -6-sulfonsäurechlorid sowie die entsprechenden Bromverbindungen, 2,4-Dichlorchinazolin-6- oder -7-carbonsäurechlorid oder -7-sulfonsäurechlorid sowie die entsprechenden Bromverbindungen, 2- oder 3- oder 4-(4'-,5'-Dichlorpyridazon-6'-yl-1')-phenylsulfonsäurechlorid oder -carbonsäurechlorid sowie die entsprechenden Bromverbindungen, ß-(4',5'-Dichlorpyridazon-6'-yl-1')-ethylcarbonsäurechlorid, 2-Chlorchinoxalin-3-carbonsäurechlorid und die entsprechende Bromverbindung, N-Methyl-N-(2,4-dichlortriazinyl-6)-carbamidsäurechlorid, N-Methyl-N-(2-chlor-4-methylamino-triazinyl-6)-carbamidsäurechlorid, N-Methyl-N-(2-chlor-4-dimethylamino-triazinyl-6)-carbamidsäurechlorid, N-Methyl- oder N-Ethyl-N-(2,4-dichlortriazinyl-(6)-aminoacetyl-chlorid, N-Methyl-, N-Ethyl- oder N-Hydroxyethyl-N-(2,3-dichlorchinoxalin-6-sulfonyl- oder -6-carbonyl)-aminoacetylchlorid und die entsprechenden Bromderivate, ferner 2-Chlorbenzthiazol-5- oder -6-carbonsäurechlorid oder -5- oder -6-sulfonsäurechlorid und die entsprechenden Bromverbindungen, 2-Arylsulfonyl- oder 2-Alkylsulfonyl-benzthiazol-5- oder -6-carbonsäurechlorid oder -5- oder -6-sulfonsäurechlorid, wie 2-Methysulfonyl- oder 2-Ethyl-sulfonyl- oder 2-Phenylsulfonyl-benzthiazol-5- oder -6-sulfonsäurechlorid oder -5- oder -6-carbonsäurechlorid sowie die entsprechenden in ankondensierten Benzolring Sulfonsäuregruppen enthaltenden 2-Sulfonylbenzthiazol-Derivate, 3,5-Bis-methylsulfonyl-isothiazol-4-carbonsäurechlorid, 2-Chlor-benzoxazol-5- oder -6-carbonsäurechlorid oder -sulfonsäurechlorid sowie die entsprechenden Bromderivate, 2-Chlorbenzimidazol-5- oder -6-carbonsäurechlorid oder -sulfonsäurechlorid sowie die entsprechenden Bromderivate, 2-Chlor-1-methylbenzimidazol-5- oder -6-carbonsäurechlorid oder -sulfonsäurechlorid sowie die entsprechenden Bromderivate, 2-Chlor-4-methylthiazol-(1,3)-5-carbonsäurechlorid oder -4- oder -5-sulfonsäurechlorid, 2-Chlorthiazol-4- oder -5-sulfonsäurechlorid und die entsprechenden Bromderivate. Weiterhin seien genannt: 5-Chlor-2,4,6-trifluor-isophthalonitril, 2,4,6-Trifluor-1,3,5-tricyanobenzol, 2,4,5,6-Tetrafluorisophthalonitril, 2,4,6-Trichlor-5-methylsulfonyl-pyrimidin, 2,4,6-Trichlor-5-methylsulfonyl-pyrimidin, 2,4,6-Trichlor-5-ethylsulfonylpyrimidin, 2,4-Difluor-5-methylsulfonyl-6-(2'-sulfophenylamino-pyrimidin.

Aus der Reihe der aliphatischen Reaktivkomponenten sind beispielsweise zu erwähnen:
Acrylsäurechlorid, Mono-, Di- oder Trichlor-acrylsäurechlorid, 3-Chlorpropionsäurechlorid, 3-Phenylsulfonylpropionsäurechlorid, 3-Methylsulfonyl-propionsäurechlorid, 3-Ethyl-sulfonylpropionsäurechlorid, 3-Chlorethansulfochlorid, Chlormethansulfochlorid, 2-Chloracetylchlorid, 2,2,3,3-Tetrafluorcyclobutan-1-carbonsäurechlorid, ß-(2,2,3,3-Tetrafluorcyclobutyl-1)-acrylsäurechlorid, ß-(2,3,3-Trifluor-2-chlorcyclobutan-1)-carbonsäurechlorid, ß-Methylsulfonyl-acrylsäurechlorid, α-Methylsulfonyl-acrylsäurechlorid und α-Bromacetylsäurechlorid und ß-Bromacrylsäurechlorid.

Führt die Umwandlung zu Farbstoffen, die mehr als eine reaktive Gruppe im Rest VIII an anderer Stelle des Farbstoffmoleküls aufweisen, so können diese teilweise durch andere Reste, beispielsweise Aminoreste ersetzt werden, die ihrerseits reaktive Gruppen, z. B. in Form veresterter Oxalkylgruppen, aufweisen können. Grundsätzlich ist die Anwesenheit zweier oder mehrerer voneinander verschiedener Reaktivgruppen im Farbstoff möglich.

Die neuen Farbstoffe der Formel (I) eignen sich zum Färben und Bedrucken von Hydroxyl- oder Amidgruppen enthaltenden Materialien, wie Textilfasern-, Fäden und Geweben aus Wolle, Seide, synthetischen Polyamid-, und Polyurethanfasern und zum waschechten Färben und Bedrucken von nativer oder regenerierter Cellulose, wobei die Behandlung von Cellulosematerialien zweckmässigerweise in Gegenwart säurebindender Mittel und gegebenenfalls durch Hitzeeinwirkung nach den für Reaktivfarbstoffe bekanntgewordenen Verfahren erfolgt.

Die angegebenen Formeln sind die der entsprechenden freien Säuren. Die Farbstoffe wurden im allgemeinen in Form der Alkalisalze, insbesondere der Na-Salze isoliert und zum Färben eingesetzt.

Die in den Beispielen genannten Gewichte beziehen sich auf die freie Säure.

Beispiel 1

88,1 g des Farbstoffs der Formel

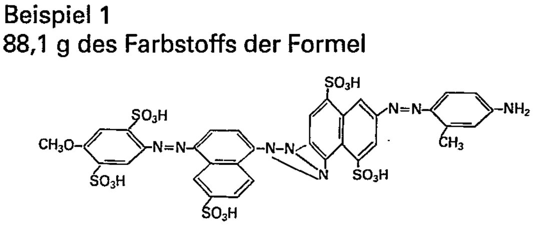

werden in 1,5 Ltr. Eiswasser gelöst. Zwischen pH 6 und 7 tropft man 13,5 g Trifluortriazin ein, wobei zur Einhaltung des pH gleichzeitig verdünnte Sodalösung zugegeben wird. Anschliessend wird jeweils mit einer der folgenden Verbindungen umgesetzt: Ammoniak, Methylamin, Ethanolamin, N-Ethylanilin, m-Sulfanilsäure.

a) Kondensation mit Ammoniak

Nach beendeter Acylierung stellt man mit 25%iger Ammoniaklösung den pH auf 9,8 und setzt bei 0 – 5° solange Ammoniaklösung hinzu, bis der pH konstant bleibt. Anschliessend stellt man mit verdünnter Salzsäure auf pH 6,5, erwärmt auf 50° und scheidet den Farbstoff durch Zugabe von Kochsalz aus. Nach dem Absaugen, Trocknen bei 60 – 70° im Umlufttrockenschrank und Mahlen erhält man ein in Wasser leicht lösliches Farbstoffpulver, das Baumwolle nach einem der für Monofluortriazin-Reaktivfarbstoffe üblichen Applikationsverfahren in goldgelben Tönen von hoher Licht- und Chlorechtheit färbt.

Wenn man anstelle der in Beispiel 1 beschriebenen Kondensation mit Ammoniak die folgenden ausführt, so resultieren Produkte mit ähnlichen färberischen Eigenschaften.

b) Umsetzung mit Methylamin

Mit 30%iger Methylaminlösung wird der pH auf 9,8 eingestellt und bei 0 – 5° solange Methylaminlösung nachgesetzt, bis der pH sich nicht mehr ändert.

Die weitere Aufarbeitung erfolgt wie in Beispiel 1a) angegeben.

c) Umsetzung mit Ethanolamin

Man setzt 6,1 g Ethanolamin zu, wobei die Zugabe so langsam erfolgt, dass der pH nicht über 9,5 ansteigt. Bei 0 – 5° wird anschliessend verdünnte Natronlauge eingetropft, um den pH bei 9,5 zu halten. Die weitere Aufarbeitung erfolgt wie in Beispiel 1a) angegeben.

d) Umsetzung mit N-Ethylanilin

Man setzt 12,2 g N-Ethylanilin zu und tropft anschliessend bei 0 – 5° verdünnte Sodalösung ein, um den pH zwischen 5,5 und 6,5 zu halten. Die weitere Aufarbeitung erfolgt wie in Beispiel 1a) angegeben.

e) Umsetzung mit m-Sulfanilsäure

Man tropft eine neutrale Lösung von 17,3 g m-Sulfanilsäure ein und hält durch gleichzeitige Zugabe von verdünnter Soda den pH zwischen 5,5 und 6,5. Die weitere Aufarbeitung erfolgt wie in Beispiel 1a) angegeben.

Die erhaltenen Farbstoffe entsprechen der Formel

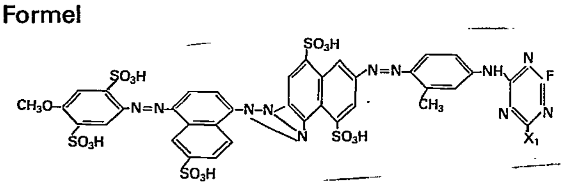

| | $-X_1$ |
|---|---|
| Bsp. 1a) | $-NH_2$ |
| Bsp. 1b) | $-NHCH_3$ |
| Bsp. 1c) | $-NHCH_2CH_2OH$ |

| | $-X_1$ |
|---|---|
| Bsp. 1d) | 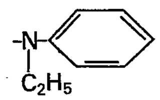 |
| Bsp. 1e) | 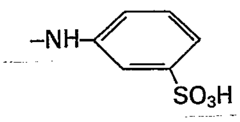 |

Herstellung des Ausgangsfarbstoffs von Beispiel 1:

Die für die Beispiele 1a)–c) verwendete Farbstoffbase wird erhalten, wenn man diazotiertes 1-Amino-2,5-disulfo-4-methoxy-benzol (Diazokomponente) auf 1-Amino-6-sulfonaphthalin (Mittelkomponente) im schwach sauren Medium kuppelt, den resultierenden Aminoazofarbstoff diazotiert und mit 1,6-Diamino-4,8-disulfo-naphthalin (Diaminokomponente) im schwach sauren Medium vereinigt, den erhaltenen o-Amino-disazofarbstoff mit Kupfersulfat in Gegenwart von Ammoniak triazoliert, das Triazol mit verdünnter Sodalösung zur Entfernung der Kupfer[I]-Salze behandelt, den Aminoazofarbstoff diazotiert und im schwach sauren Medium mit m-Toluidin (Kupplungskomponente) kuppelt.

Gleichfalls wertvolle Produkte erhält man, wenn man nach den in Beispiel 1 gemachten Angaben unter Verwendung der in folgender Tabelle aufgeführten Komponenten (Diazokomponente, Mittelkomponente, Diaminokomponente und Kupplungskomponente) verfährt, wobei für die Umsetzung der Farbstoffbasen mit den Reaktivkomponenten die aus der Literatur bekannten Bedingungen gewählt werden. In der letzten Spalte der folgenden Tabelle sind die auf Baumwolle erhaltenen Farbtöne aufgeführt.

| Beispiel | Diazokomponente | Mittelkomponente | Diaminkomponente | Kupplungskomponente | Reaktivkomponente | Farbton |
|---|---|---|---|---|---|---|
| 2 | 1-Amino-4-methoxy-benzol-2,5-disulfonsäure | Amino-naphthalin-6-sulfonsäure | 1,3-Diamino-benzol-4-sulfonsäure | m-Toluidin | 2,4-Difluor-6-amino-triazin | goldgelb |
| 3 | 1-Amino-4-methoxy-benzol-2,5-disulfonsäure | Amino-naphthalin-6-sulfonsäure | 1,3-Diamino-benzol-4-sulfonsäure | 3-Aminoacetanilid | 2,4-Difluor-6-amino-triazin | goldgelb |
| 4 | 1-Amino-4-methoxy-benzol-2,5-disulfonsäure | Amino-naphthalin-6-sulfonsäure | 1,3-Diamino-benzol-4-sulfonsäure | 3-Aminophenylharnstoff | 2,4-Difluor-6-amino-triazin | goldgelb |
| 5 | 1-Amino-4-methoxy-benzol-2,5-disulfonsäure | Amino-naphthalin-6-sulfonsäure | 1,6-Diamino-naphthalin-4,8-disulfonsäure | 3-Aminophenylharnstoff | 2,4-Difluor-6-amino-triazin | goldgelb |
| 6 | 1-Amino-4-methoxy-benzol-2,5-disulfonsäure | Amino-naphthalin-6-sulfonsäure | 1,6-Diamino-naphthalin-4,8-disulfonsäure | 3-Amino-acetanilid | 2,4-Difluor-6-amino-triazin | goldgelb |
| 7 | 1-Amino-2-methoxy-5-methyl-benzol-4-sulfonsäure | Amino-naphthalin-6-sulfonsäure | 1,6-Diamino-naphthalin-4,8-disulfonsäure | 3-Amino-acetanilid | 2,4-Difluor-6-amino-triazin | goldgelb |
| 8 | 1-Amino-2-methoxy-5-methyl-benzol-4-sulfonsäure | Amino-naphthalin-6-sulfonsäure | 1,6-Diamino-naphthalin-4,8-disulfonsäure | 3-Aminophenylharnstoff | 2,4-Difluor-6-amino-triazin | goldgelb |
| 9 | 1-Amino-2-methoxy-5-methyl-benzol-4-sulfonsäure | Amino-naphthalin-6-sulfonsäure | 1,6-Diamino-naphthalin-4,8-disulfonsäure | m-Toluidin | 2,4-Difluor-6-amino-triazin | goldgelb |
| 10 | 1-Amino-2-methoxy-5-methyl-benzol-4-sulfonsäure | Amino-naphthalin-6-sulfonsäure | 1,6-Diamino-naphthalin-4,8-disulfonsäure | m-Toluidin | 2,4-Difluor-6-ß-oxi-ethylamino-triazin | goldgelb |
| 11 | 1-Amino-2-methoxy-benzol-5-sulfonsäure | 1-Amino-naphthalin-6-sulfonsäure | 1,6-Diamino-naphthalin-4,8-disulfonsäure | m-Toluidin | 2,4-Difluor-6-(2'-sulfophenyl-amino)-triazin | goldgelb |
| 12 | 1-Amino-4-methoxy-benzol-5-sulfonsäure | 1-Amino-naphthalin-6-sulfonsäure | 1,6-Diamino-naphthalin-4,8-disulfonsäure | m-Toluidin | 2,4-Difluor-6-(2'-sulfophenyl-amino)-triazin | goldgelb |
| 13 | 1-Amino-benzol-2,5-disulfonsäure | 1-Amino-naphthalin-6-sulfonsäure | 1,6-Diamino-naphthalin-4,8-disulfonsäure | m-Toluidin | 2,4-Difluor-6-(2'-sulfophenyl-amino)-triazin | goldgelb |

| Beispiel | Diazokomponente | Mittelkomponente | Diaminkomponente | Kupplungskomponente | Reaktivkomponente | Farbton |
|---|---|---|---|---|---|---|
| 14 | 1-Amino-benzol-2,5-disulfonsäure | 1-Amino-naphthalin-6-sulfonsäure | 1,6-Diamino-naphthalin-4,8-disulfonsäure | 3-Amino-acetanilid | 2,4-Difluor-6-aminotriazin | goldgelb |
| 15 | 1-Amino-benzol-2,5-disulfonsäure | 1-Amino-naphthalin-6-sulfonsäure | 1,6-Diamino-naphthalin-4,8-disulfonsäure | 3-Aminophenylharnstoff | 2,4-Difluor-6-aminotriazin | goldgelb |
| 16 | 1-Amino-benzol-2,5-disulfonsäure | 1-Amino-naphthalin-6-sulfonsäure | 1,6-Diamino-naphthalin-4,8-disulfonsäure | Anilin | 2,4-Difluor-6-aminotriazin | goldgelb |
| 17 | 1-Amino-benzol-2,5-disulfonsäure | 1-Amino-naphthalin-6-sulfonsäure | 1,6-Diamino-naphthalin-4,8-disulfonsäure | o-Anisidin | 2,4-Difluor-6-aminotriazin | goldgelb |
| 18 | 1-Amino-benzol-2,5-disulfonsäure | 1-Amino-naphthalin-6-sulfonsäure | 1,6-Diamino-naphthalin-4,8-disulfonsäure | 1-Amino-2-methoxy-5-methyl-benzol | 2,4-Difluor-6-aminotriazin | goldgelb |
| 19 | 1-Amino-benzol-2,5-disulfonsäure | 1-Amino-naphthalin-6-sulfonsäure | 1,6-Diamino-naphthalin-4,8-disulfonsäure | o-Toluidin | 2,4-Difluor-6-aminotriazin | goldgelb |
| 20 | 1-Amino-benzol-2,5-disulfonsäure | m-Toluidin | 1,3-Diamino-benzol-4-sulfonsäure | o-Anisidin | 2,4,6-Trifluor-5-chlorpyrimidin | gelb |
| 21 | 1-Amino-benzol-2,5-disulfonsäure | m-Toluidin | 1,3-Diamino-benzol-4-sulfonsäure | m-Toluidin | 2,4-Difluor-6-amino-triazin | gelb |
| 22 | 1-Amino-benzol-2,5-disulfonsäure | 1-Amino-2-methoxy-5-methyl-benzol | 1,3-Diamino-benzol-4-sulfonsäure | m-Toluidin | 2,4-Difluor-6-amino-triazin | gelb |
| 23 | 1-Amino-benzol-2,5-disulfonsäure | o-Anisidin | 1,3-Diamino-benzol-4-sulfonsäure | m-Toluidin | 2,4-Difluor-6-amino-triazin | gelb |
| 24 | 1-Amino-benzol-2,4-disulfonsäure | 1-Amino-naphthalin-6-sulfonsäure | 1,3-Diamino-benzol-4-sulfonsäure | m-Toluidin | 2,4-Difluor-6-amino-triazin | gelb |
| 25 | 1-Amino-benzol-2,4-disulfonsäure | 1-Amino-naphthalin-6-sulfonsäure | 1,6-Diamino-naphthalin-4,8-disulfonsäure | m-Toluidin | 2,4-Difluor-6-amino-triazin | goldgelb |
| 26 | 1-Amino-benzol-2,4-disulfonsäure | 1-Amino-naphthalin-6-sulfonsäure | 1,6-Diamino-naphthalin-4,8-disulfonsäure | 3-Aminoacetanilid | 2,4-Difluor-6-amino-triazin | goldgelb |
| 27 | 1-Amino-benzol-2,4-disulfonsäure | 1-Amino-naphthalin-6-sulfonsäure | 1,6-Diamino-naphthalin-4,8-disulfonsäure | 3-Aminophenylharnstoff | 2,4-Difluor-6-amino-triazin | goldgelb |
| 28 | 2-Amino-naphthalin-4,8-disulfonsäure | m-Toluidin | 1,6-Diamino-naphthalin-4,8-disulfonsäure | m-Toluidin | 2,4-Difluor-6-(N-ethylphenyl)-amino-triazin | goldgelb |
| 29 | 2-Amino-naphthalin-6,8-disulfonsäure | m-Toluidin | 1,6-Diamino-naphthalin-4,8-disulfonsäure | m-Toluidin | 2,4-Difluor-6-(N-ethylphenyl)-amino-triazin | goldgelb |
| 30 | 2-Amino-naphthalin-5,7-disulfonsäure | m-Toluidin | 1,6-Diamino-naphthalin-4,8-disulfonsäure | m-Toluidin | 2,4-Difluor-6-(N-ethylphenyl)-amino-triazin | goldgelb |
| 31 | 2-Amino-naphthalin-3,6,8-trisulfonsäure | m-Toluidin | 1,6-Diamino-naphthalin-4,8-disulfonsäure | m-Toluidin | 2,4-Difluor-6-(N-ethylphenyl)-amino-triazin | goldgelb |
| 32 | 2-Amino-naphthalin-4,6,8-trisulfonsäure | m-Toluidin | 1,6-Diamino-naphthalin-4,8-disulfonsäure | m-Toluidin | 2,4-Difluor-6-(N-ethylphenyl) amino-triazin | goldgelb |
| 33 | 2-Amino-naphthalin-4,6,8-trisulfonsäure | m-Toluidin | 1,3-Diamino-benzol-4-sulfonsäure | m-Toluidin | 2,4-Difluor-6-phenyl-amino-triazin | goldgelb |

| Bei-spiel | Diazo-komponente | Mittel-komponente | Diamin-komponente | Kupplungs-komponente | Reaktiv-komponente | Farbton |
|---|---|---|---|---|---|---|
| 34 | 2-Amino-naph-thalin-4,6,8-trisul-fonsäure | 1-Amino-naph-thalin-6-sulfon-säure | 1,3-Diamino-benzol-4-sulfon-säure | m-Toluidin | 2,4-Difluor-6-phenyl-amino-triazin | goldgelb |
| 35 | 2-Amino-naph-thalin-4,6,8-trisul-fonsäure | 1-Amino-naph-thalin-6-sulfon-säure | 1,3-Diamino-benzol | m-Toluidin | 2,4-Difluor-6-(2'-sulfophenyl amino)-triazin | goldgelb |
| 36 | 2-Amino-naph-thalin-4,6,8-trisul-fonsäure | 1-Amino-naph-thalin-6-sulfon-säure | 1,3-Diamino-4-methylbenzol | m-Toluidin | 2,4-Difluor-6-(2'-sulfophenyl amino)-triazin | goldgelb |
| 37 | 1-Amino-4-methoxy-benzol-2,5-disulfonsäure | 1-Amino-naph-thalin-6-sulfon-säure | 1,6-Diamino-naphthalin-4,8-disulfonsäure | m-Toluidin | 2,3-Dichlor-chinoxalincar-bonsäurechlorid | goldgelb |
| 38 | 1-Amino-4-methoxy-benzol-2,5-disulfonsäure | 1-Amino-naph-thalin-6-sulfon-säure | 1,6-Diamino-naphthalin-4,8-disulfonsäure | m-Toluidin | 2,4-Dichlor-6-amino-triazin | goldgelb |
| 39 | 1-Amino-4-methoxy-benzol-2,5-disulfonsäure | 1-Amino-naph-thalin-6-sulfon-säure | 1,6-Diamino-naphthalin-4,8-disulfonsäure | m-Toluidin | 2,4-Dichlor-6-methoxy-ethoxy-triazin | goldgelb |
| 40 | 1-Amino-4-methoxy-benzol-2,5-disulfonsäure | 1-Amino-naph-thalin-6-sulfon-säure | 1,6-Diamino-naphthalin-4,8-disulfonsäure | m-Toluidin | 2,4-Dichlor-6-(2'-sulfophenyl amino)-triazin | goldgelb |
| 41 | 1-Amino-4-methoxy-benzol-2,5-disulfonsäure | 1-Amino-naph-thalin-6-sulfon-säure | 1,6-Diamino-naphthalin-4,8-disulfonsäure | m-Toluidin | 2,4-Difluor-5,6-dichlor-pyri-midin | goldgelb |
| 42 | 1-Amino-4-methoxy-benzol-2,5-disulfonsäure | 1-Amino-naph-thalin-6-sulfon-säure | 1,6-Diamino-naphthalin-4,8-disulfonsäure | m-Toluidin | 2,4-Difluor-5-chlor-6-methyl-pyrimidin | goldgelb |
| 43 | 1-Amino-4-methoxy-benzol-2,5-disulfonsäure | 1-Amino-naph-thalin-6-sulfon-säure | 1,6-Diamino-naphthalin-4,8-disulfonsäure | m-Toluidin | Tetrachlorpyri-midin | goldgelb |
| 44 | 1-Amino-benzol-2,5-disulfonsäure | 1-Amino-naph-thalin-6-sulfon-säure | 1,3-Diamino-4-methoxybenzol | m-Toluidin | 2,4-Difluor-6-(2'-sulfophenyl-amino)-triazin | goldgelb |
| 45 | 1-Amino-benzol-2,5-disulfonsäure | 1-Amino-naph-thalin-6-sulfon-säure | 1,3-Diamino-4-methoxybenzol | 1-Amino-naph-thalin-6-sulfon-säure | 2,4-Difluor-6-(2'-sulfophenyl-amino)-triazin | goldgelb |

Beispiel 46

79,6 g des Aminotriazolazoreaktivfarbstoffs der Formel

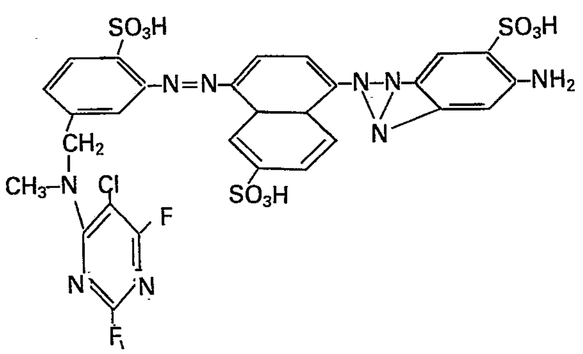

werden in 2 Ltr. Wasser neutral gelöst und mit 7 g $NaNO_2$ versetzt. Diese Lösung gibt man in eine Vorlage aus 1 Ltr. Eiswasser und 28 ml konz. Salzsäure. Der Überschuss an Nitrit wird mit Amidosulfonsäure entfernt. In die Diazotierung gibt man dann 19,4 g der Kupplungskomponente 1-Ethyl-3-carbamoyl-4-methyl-6-hydroxy-pyridon-2 und Natriumhydrogencarbonat, bis der pH von 5,5 erreicht ist.

Nach beendigter Kupplung wird der Farbstoff ausgesalzen, abgesaugt, bei 60 – 70°C im Umlufttrockenschrank getrocknet und gemahlen. Man erhält ein in Wasser leicht lösliches gelbes Farbstoffpulver. Nach einem der für Reaktivfarbstoffe der 2,4-Difluor-5-chlor-pyrimidinyl-6-Reihe üblichen Applikationsverfahren erhält man kräftige gelbe Färbungen.

**Patentansprüche**

1) Disazoreaktivfarbstoffe der Formel

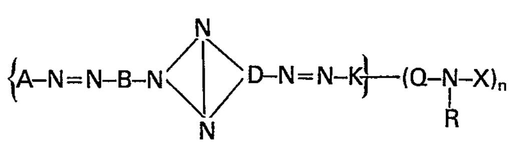 (I)

worin

A = gegebenenfalls durch $SO_3H$, $OCH_3$, $OC_2H_5$, $CH_3$, COOH substituierter Benzolrest oder gegebe-

nenfalls durch $SO_3H$ substituierter Naphthalinrest
B = zweiwertiger Rest der Benzol- oder Naphthalinreihe,

K = Rest einer Kupplungskomponente der Benzol-, Naphthalin- oder der heterocyclischen Reihe,
D = Rest eines annellierten Benzol- oder Naphthalinringes,
n = 1 oder 2,
R = Wasserstoff oder $C_1$–$C_4$-Alkyl,
X = Rest einer Reaktivkomponente,
Q = direkte Bindung oder Brückenglied

R
|
und worin der Rest –Q–N–X an ein aromatisch-carbocyclisches C-Atom der Reste A und/oder K oder an ein aromatisch-heterocyclisches C- oder N-Atom des Restes K gebunden sein kann, die Reste A, B, D und K zusammen mindestens zwei Sulfogruppen enthalten und für den Fall, dass A und B Reste eines Benzolkerns darstellen, mindestens ein Rest A oder B einen Substituenten aus der Reihe $C_1$–$C_4$-Alkyl, $C_1$–$C_4$-Alkoxy oder Acylamino enthalten muss.

2) Farbstoffe gemäss Anspruch 1, dadurch gekennzeichnet, dass A für einen der folgenden Reste steht,
2-, 3- oder 4-Sulfophenyl,
2,4-, 3,5- oder 2,5-Disulfophenyl,
2-Sulfo-4-methoxyphenyl,
2-Sulfo-4-ethoxyphenyl,
2,4-Dimethyl-6-sulfophenyl,
2-Carboxy-4-sulfophenyl,
2-Carboxy-5-sulfophenyl,
4-Methyl-2,5-disulfophenyl,
2-Methoxy-5-methyl-4-sulfophenyl,
4-Methoxy-3-sulfophenyl,
4-Methyl-3-sulfophenyl,
2-, 3- oder 4-Carboxyphenyl,
2-, 4-, 5-, 6-, 7- oder 8-Sulfonaphthyl-(1),
1-, 5- oder 6-Sulfonaphthyl-(2),
2,5,7-Trisulfonaphthyl-(1),
1,5,7-Trisulfonaphthyl-(2),
3,6,8-Trisulfonaphthyl-(2) oder
4,6,8-Trisulfonaphthyl-(2)
und wobei die Reste B, K, D, R, X, Q sowie n die in Anspruch 1) angegebene Bedeutung besitzen.

3) Farbstoffe der Formel

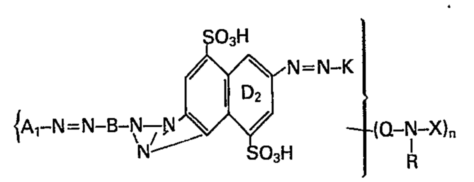

worin A, B, K, Q, R, X und n die in Anspruch 1 angegebene Bedeutung haben und der Naphthalinring $D_2$ eine OH-Gruppe enthalten kann, die über die Azobrücke zusammen mit einer zur Komplexbildung befähigten Gruppe im Rest K einen Schwermetallkomplex, insbesondere einen Cu-Komplex, bilden kann.

4) Farbstoffe der Formel

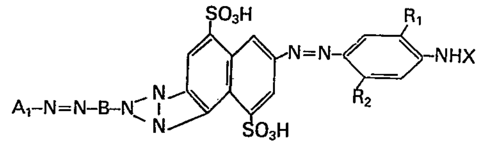

worin A, B und X die in Anspruch 1 angegebene Bedeutung haben und
$R_1$ = Wasserstoff, Halogen wie Fluor, Chlor, Brom, $C_1$–$C_4$-Alkyl, $C_1$–$C_4$-Alkoxy,
$R_2$ = Wasserstoff, $C_1$–$C_4$-Alkyl, $C_1$–$C_4$-Alkoxy, Acylamino.

5) Farbstoffe der Ansprüche 3 bis 4, in denen X für den Rest einer fluorhaltigen Reaktivkomponente der Pyrimidinreihe oder eines Monofluortriazins steht.

6) Verfahren zur Herstellung der Farbstoffe des Anspruchs 1, dadurch gekennzeichnet, dass man Farbstoffe der Formel

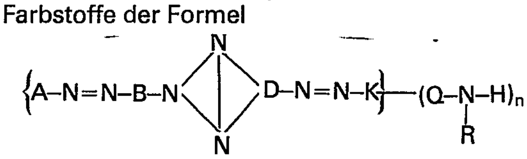

mit n Mol Reaktivkomponente der Formel

X–Y,

worin Y einen als Anion abspaltbaren Substituenten darstellt, unter Abspaltung von n Mol HY umsetzt.

7) Verwendung der Farbstoffe der Ansprüche 1 bis 5 zum Färben und Bedrucken hydroxyl- und/oder stickstoff-haltiger Materialien.

**Claims**

1) Disazo reactive dyestuffs of the formula

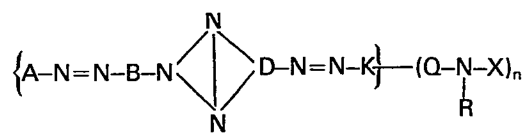 (I)

wherein
A = a benzene radical which is optionally substituted by $SO_3H$, $OCH_3$, $OC_2H_5$, $CH_3$ or COOH, or a naphthalene radical which is optionally substituted by $SO_3H$,
B = a divalent radical of the benzene or naphthalene series,
K = a radical of a coupling component of the benzene, naphthalene or heterocyclic series,
D = a radical of a fused-on benzene or naphthalene ring,
n = 1 or 2,
R = hydrogen or $C_1$–$C_4$-alkyl,
X = a radical of a reactive component,
Q = a direct bond or bridge member
and wherein

R
|
the radical –Q–N–X can be bonded to an aromatic carbocyclic C atom of the radicals A and/or K or to an aromatic heterocyclic C or N atom of the radical

K, the radicals A, B, D and K together contain at least two sulpho groups and in the case in which A and B represent radicals of a benzene nucleus at least one radical, A or B, must contain a substituent from the series comprising $C_1$–$C_4$–alkyl, $C_1$–$C_4$–alkoxy or acylamino.

2) Dyestuffs according to Claim 1, characterised in that A represents one of the following radicals,
2-, 3- or 4-sulphophenyl,
2,4-, 3,5- or 2,5-disulphophenyl,
2-sulpho-4-methoxyphenyl,
2-sulpho-4-ethoxyphenyl,
2,4-dimethyl-6-sulphophenyl,
2-carboxy-4-sulphophenyl,
2-carboxy-5-sulphophenyl,
4-methyl-2,5-disulphophenyl,
2-methoxy-5-methyl-4-sulphophenyl,
4-methoxy-3-sulphophenyl,
4-methyl-3-sulphophenyl,
2-, 3- or 4-carboxyphenyl,
2-, 4-, 5-, 6-, 7- or 8-sulphonaphth-1-yl,
1-, 5- or 6-sulphonaphth-2-yl,
2,5,7-trisulphonaphth-1-yl,
1,5,7-trisulphonaphth-2-yl,
3,6,8-trisulphonaphth-2-yl or
4,6,8-trisulphonaphth-2-yl,
and wherein the radicals B, K, D, R, X, Q and n have the meaning indicated in Claim 1.

3) Dyestuffs of the formula

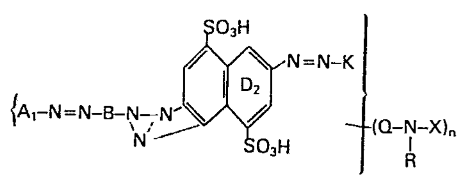

wherein
A, B, K, Q, R, X and n have the meaning indicated in Claim 1 and the naphthalene ring $D_2$ can contain an OH group which can from a heavy metal complex, in particular a Cu complex, via the azo bridge, together with a group, capable of complex formation, in the radical K.

4) Dyestuffs of the formula

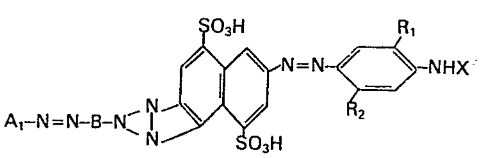

wherein
A, B and X have the meaning indicated in Claim 1 and
$R_1$ = hydrogen, halogen such as fluorine, chlorine, bromine, $C_1$–$C_4$–alkyl or $C_1$–$C_4$–alkoxy, and
$R_2$ = hydrogen, $C_1$–$C_4$–alkyl, $C_1$–$C_4$–alkoxy or acylamino.

5) Dyestuffs of Claims 3 to 4, in which X represents the radical of a fluorine-containig reactive component of the pyrimidine series or of a monofluorotriazine.

6) Process for the preparation of the dyestuffs of Claim 1, characterised in that dyestuffs of the formula

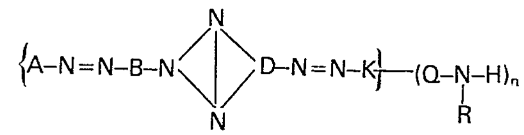

are reacted with n mols of a reactive component of the formula

X–Y

wherein
Y represents a substituent which can be split off as an anion,
n mols of HY being split off.

7) Use of the dyestuffs of Claims 1 to 5 for dyeing and printing materials containing hydroxyl and/or nitrogen.

**Revendications**

1) Colorants disazoïques réactifs, de formule

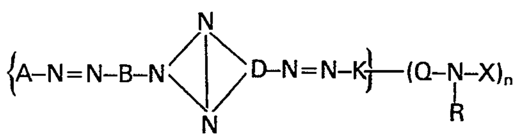 (I)

dans laquelle
A = radical benzène (éventuellement substitué par $SO_3H$, $OCH_3$, $OC_2H_5$, $CH_3$, COOH) ou radical naphtalène (éventuellement substitué par $SO_3H$),
B = radical divalent de la série benzénique ou naphtalénique,
K = radical d'un copulant de la série du benzène, du naphtalène ou de la série hétérocyclique,
D = radical d'un noyau benzénique ou naphtalénique condensé,
n = 1 ou 2,
R = hydrogène ou alkyle en $C_1$–$C_4$,
X = radical d'un constituant réactif,
Q = liaison directe ou chaînon de pontage,
et dans laquelle le radical $-Q-\overset{R}{\overset{|}{N}}-X$ peut être relié à un atome de carbone carbocyclique aromatique du radical A et/ou K ou à un atome de C ou de N hétérocyclique aromatique du radical K, les radicaux A, B, D et K contiennent ensemble au moins deux groupes sulfo et, si les radicaux A et B représentent un noyau benzénique, au moins l'un des radicaux A ou B doit contenir un substituant choisi dans l'ensemble formé par un groupe alkyle en $C_1$–$C_4$, alcoxy en $C_1$–$C_4$ ou acylamino.

2) Colorants selon la revendication 1, caractérisé en ce que A représente l'un des radicaux suivants
2-, 3- ou 4-sulfophényle,
2,4-, 3,5- ou 2,5-disulfophényle,
2-sulfo-4-méthoxyphényle,
2-sulfo-4-éthoxyphényle,
2,4-diméthyl-6-sulfophényle,
2-carboxy-4-sulfophényle,
2-carboxy-5-sulfophényle,
4-méthyl-2,5-disulfophényle,
2-méthoxy-5-méthyl-4-sulfophényle,

4-méthoxy-3-sulfophényle,
4-méthyl-3-sulfophényle,
2-, 3- ou 4-carboxyphényle,
2-, 4-, 5-, 6-, 7- ou 8-sulfonaphtyle-(1),
1-, 5- ou 6-sulfonaphtyle-(2),
2,5,7-trisulfonaphtyle-(1),
1,5,7-trisulfonaphtyle-(2),
3,6,8-trisulfonaphtyle-(2), ou
4,6,8-trisulfonaphtyle-(2)

et les radicaux B, K, D, R, X, Q ainsi que n, ont le sens indiqué à la revendication 1.

3) Colorants de formule

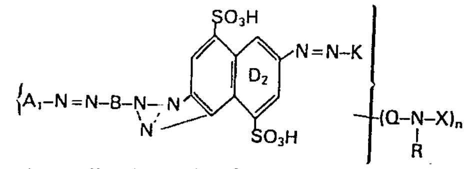

dans laquelle A, B, K, Q, R, X et n ont les sens indiqué à la revendication 1, et le noyau naphtalène $D_2$ peut contenir un groupe OH qui, par l'intermédiaire du pont azoïque peut former avec un groupe du radical K, capable de former les complexes, un complexe de métal lourd, notamment un complexe de cuivre.

4) Colorants de formule

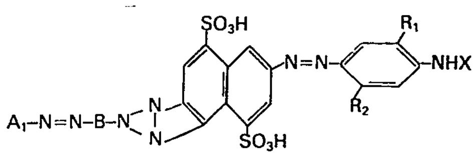

dans laquelle
A, B et X ont le sens indiqué à la revendication 1, et
$R_1$ = hydrogène, halogène tel que fluor, chlore, brome, alkyle en $C_1$–$C_4$, alcoxy en $C_1$–$C_4$,
$R_2$ = hydrogène, alkyle en $C_1$–$C_4$, alcoxy en $C_1$–$C_4$, acylamino.

5) Colorants des revendications 3 à 4, dans lesquels X représente le radical d'un constituant réactif fluoré de la série de la pyrimidine ou d'une monofluorotriazine.

6) Procédé de préparation des colorants selon la revendication 1, caractérisé en ce qu'on fait réagir, avec séparation de n mol de HY, des colorants de formule

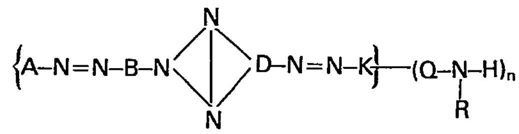

avec n mol du constituant réactif de formule

X–Y

où Y représente un substituant pouvant être séparé sous forme d'anions.

7) Utilisations des colorants des revendications 1 à 5 pour teindre et colorer les matières hydroxylées et/ou azotées.